# EUROPEAN PATENT SPECIFICATION

(11) **EP 3 253 126 B1**
(45) Date of publication and mention of the grant of the patent: **22.07.2020**
(21) Application number: 16195420.1
(22) Date of filing: 25.10.2016
(51) Int. Cl.: H04W 40/24, H04W 40/12, H04W 84/04, H04W 16/24

(54) **METHOD FOR SCHEDULING TRANSMISSION RESOURCES IN A MOBILE COMMUNICATION SYSTEM AND BASE STATION, RELAY STATION AND USER EQUIPMENT STATION FOR THE USE IN THE METHOD**
VERFAHREN ZUR PLANUNG VON ÜBERTRAGUNGSRESSOURCEN IN EINEM MOBILKOMMUNIKATIONSSYSTEM UND BASISSTATION, RELAISSTATION UND BENUTZERGERÄTESTATION ZUR VERWENDUNG IN DEM VERFAHREN
PROCÉDÉ DE PROGRAMMATION DE RESSOURCES DE TRANSMISSION DANS UN SYSTÈME DE COMMUNICATION MOBILE ET STATION DE BASE, STATION RELAIS ET STATION D'ÉQUIPEMENT D'UTILISATEUR POUR UTILISATION DANS LE PROCÉDÉ

(30) Priority: 31.05.2016 DE 102016209401
(43) Date of publication of application: 06.12.2017
(73) Proprietor: Volkswagen Aktiengesellschaft, 38440 Wolfsburg (DE)
(72) Inventor: Hehn, Thorsten, 38444 Wolfsburg (DE)

(56) References cited:
- EP-A1- 2 658 314
- US-A1- 2010 238 854
- US-A1- 2014 119 237

## Description

The disclosure relates to a method for scheduling transmission resources in a mobile communication system. The scheduling method involves an innovative route selection process as part of the scheduling method. The disclosure further relates to a base station, relay station and user equipment station for the use in the method.

### Background

For the scenario of vehicles equipped with wireless communication modules that communicate directly with each other on public roads, either for a cooperative or autonomous driving scenario, a very high reliability is very important. Techniques for vehicle-to-vehicle direct communication have been developed and will be further developed. As an example the direct vehicle communication via WLAN may be mentioned. Especially the variant according to the WLAN standard IEEE 802.11p is suitable for this purpose. For communication between vehicles ad hoc wireless networks are set up (Communication in the "Ad Hoc domain") according to this technique.

But also vehicle communication is possible in the field of mobile networks. In this technique, however, the base station needs to convey the messages from vehicle to vehicle. This is the area where the communication in the so-called "Infrastructure domain" takes place. For the next generation of mobile communications, the vehicle-to-vehicle direct communication is made possible. When Long Term Evolution (LTE) technology is concerned, this variant is named LTE V (for vehicle), in the 5G initiative this variant is called Device-to-Device communication (D2D). This is also the range of the vehicle communication with which the present invention is concerned.

Typical communication scenarios are safety scenarios, traffic efficiency and infotainment scenarios. In the safety area, the following example scenarios are called: "Cooperative Forward Collision Warning", "Pre-Crash Sensing / Warning", "Hazardous Location Warning". In these areas, the vehicles will exchange information with each other, such as position, movement direction and speed, and parameters such as size and weight. Other information important for the transfer is e.g. intent information, such as "vehicle intends to overtake", "vehicle turns left / right", and so forth that are interesting for the cooperative driving. Here, often sensor data are transferred. If a hazard is present and the driver does not react, the car could automatically slow down, so that an accident is prevented or at least the consequences of the inevitable accident are minimized. In the area of "platooning", this is the area of driving in a convoy, it is planned, for example, a reporting back of information about an intended braking maneuver from front to back to avoid rear-end collisions.

In the field of traffic management it is mentioned: "Enhanced Route Guidance and Navigation", "Green-Light Optimal Speed Advisory" und "V2V Merging Assistance" as examples.

In the field of Infotainment Internet access is most important for a plurality of multimedia services,.

The listing shows that in particular in the safety field time-critical data transmissions take place. Therefore, the latency of the vehicle-to-vehicle communication is crucial. Latency refers to the aspect of the timely transmission of the data. The data must arrive at the receiver early enough so that they may still be processed and the receiver can react accordingly.

Currently the following mobile communication technologies are applicable: 3GPP-based UMTS, HSPA, LTE, and the upcoming 5G standards. For the purpose of direct V2V-communication are mentioned LTE V and 5G D2D.

Once periodically recurring data have to be transferred, it is more efficient to reserve transmission resources for transmission of this data, and to assign transmission resources to the sending station. This task is assigned in today's mobile phone communication standards to a management unit, which is also known under the term "scheduler". This management unit is typically placed in the base station of a mobile communication cell. In the LTE mobile communication system, the base station is briefly referred to as eNodeB, according to "evolved node basis".

So there is the situation that in the direct communication between vehicles with mobile communication (LTE-V, 5G), the transfer takes place from vehicle to vehicle, but the network provider via the base station eNodeB controls the resources. This so-called scheduling of mobile operator determines which frequency resource may be used at what time for direct communication.

In particular, all user activities are orchestrated within the cell of the base station - In particular - in mobile communications. The scheduler is usually a software component in the base station informs each participant, at what time and on which frequencies of the transmission frame, he is allowed to send certain data. Its main task consists in the equitable allocation of transmission resources to the various participants. Thus collisions are avoided, in both directions of transmission from a subscriber (uplink) and to a subscriber (downlink) and the traffic is regulated, allowing a more efficient access to a variety of users.

Currently the scheduling types "Dynamic Scheduling" and "Semi-Persistent scheduling" are known in mobile communication systems.

Newer cellular standards (3GPP Release 12 and later, i.e. LTE-V and the coming generation 5G) soften the cellular concept to enable direct communication. The scheduler has in this form of communication still the task of resource allocation; the communication between vehicles however takes place directly, without going through the base station (so-called Sidelink traffic).

The two above mentioned types of scheduling are:
- Dynamic Scheduling: This comes into play when accessing data services. Standing data (in the case of uplink on the handset or in the case of downlink at the base station), the Scheduler for this transmission dynamically assigns the resources. The allocated resources are used by the transmitter for transmitting. The receiver listens to those transmission resources. The allocation of resources to the users is done such that in most mobile radio cells the total capacity of the cell is as high as possible without (e.g. at the edge of the cell) to affect individual users too much. A typical scheduling algorithm coping with such constraints is named "Channel-dependent proportionally-fair scheduling".
- Semi-Persistent Scheduling: This type of scheduling is used when a user at regular intervals requires a predictable amount of resources. In practice, this form is used for example in telephony, e.g. Voice over LTE (VoLTE). To transfer the call transmission resources are needed, periodically. This type of scheduling requires less signaling overhead, but it can only be used for static scenarios.

The 3GPP initiative has introduced in LTE-Advanced (4G) the concept of Relay Node to extend coverage area and improve the transport capacity. Relay Nodes, usually deployed at selective locations, aim to provide coverage in shaded areas or increase the capacity at hot spots. In this initiative the focus was on coverage extension to fill holes in the coverage area. A fixed installed relay station was exactly placed such that it had a good direct link to the base station eNodeB and could serve mobile terminals in the hole. The base station to which a Relay Node RN is connected is called a Donor eNodeB (DeNodeB) via radio interface Un, a modified version of the E-UTRAN air interface Uu. The DeNodeB also serves its own UEs as usual, in addition to sharing its radio resources with relay nodes RN.

Another approach is based on a tunneling protocol in which a communication tunnel is set up between relay node RN and the base station eNodeB, thereby eliminating the need to set-up a donor eNodeB DeNodeB.

For the V2V communication in above mentioned scenarios the increase of the transport capacity is more in focus than the hole filling or coverage area extension. It is therefore an aim of the system designers to introduce the idea of mobile relaying in which the vehicle on-board units beside their normal functionality of a user equipment node UE have the capability and can be configured to play the role of a relay node. Then a vehicle in the vicinity to a vehicle having a high demand for mobile communication can act as a mobile relay node where it receives the data from the base station in representation of the high demanding vehicle and forward the data to the final destination. Likewise a mobile terminal of a passenger inside the vehicle may have a high demand for mobile communication where a mobile relay preferably equipped in the vehicle may help.

The use of mobile relaying to improve the data transport capacity is proposed in EP 2 658 314 A1. An on-board unit of a vehicle will be configured as a mobile relay station providing data transport service for the mobile terminals of the passengers traveling with the vehicle. The solution described in this reference deals with interference problems resulting if a mobile transceiver being in the coverage area of the mobile relay is denied to handover to the mobile relay, in particular in a single carrier case.

### Summary

With the conception of mobile relaying and more in particular vehicle mounted mobile relaying, there is opened a plurality of communication routes to a user equipment node UE from eNodeB. It is the task of a scheduler in the eNodeB to determine the appropriate route to a UE which requests a downlink or uplink data transport. Beside the direct link from eNodeB to UE there is a plurality of routes available via one or more relay nodes RN. For determining the most efficient route in optimized fashion, the scheduler would need to know the link quality of all single links. Since multiple stations may be deployed the reporting of all link qualities is impractical. Consider the traffic with a plurality of moving vehicles. In such a situation the link qualities rapidly change such that link quality reports need to recur in short time intervals. This is simply too much overhead traffic which would mean that the in focus goal of mobile relaying to increase the efficiency of data transport could not be met.

There is therefore a need for an improved measurement reporting / link quality reporting system in a mobile communication system based on the concept of mobile relaying which is more flexible and allows controlling the reporting expenditure.

These and other objects are solved with a method for scheduling of transmission resources in a mobile communication system with mobile relaying and corresponding base station and relay node and user equipment node according to the independent claims 1, 12, 13 and 14.

The dependent claims contain advantageous developments and improvements to the method and devices (base station, relay node and user equipment node) according to the disclosure.

According to the solution covered by the independent claim 1, the method for scheduling transmission resources involves a step of sending from a user equipment node to a base station one or more measurement reports concerning the channel quality of the direct communication path to the base station as usual. Moreover, the base station performs a segmentation of its coverage area and informs the associated relay nodes and user equipment nodes about their affiliation to a segment. With this information the relay nodes and user equipment nodes send measurement reports only for a subset of all communication links to the reporting node, wherein the selection of the subset is based on a selection rule referring to the structure of the segmentation. Based on this reduced set of measurement reports the base station determines a route for the communication with the reporting user equipment. This method provides a flexible solution for scheduling transmission resources for the concept of mobile relaying in which the tradeoff between reporting expenditure and accuracy of the route selection process can be easily controlled. It may even be possible to control it seamlessly.

In one embodiment the segmentation of the coverage area is in the form of angular sectors and layers around the base station. The layers may have the form of concentrically layers in the form of ball cups with a defined thickness. The solution is very flexible because the scheduler may adjust the number of layers as well as the thickness of layers. For example, the choice of great sectors, and small thickness of layers means high reporting expenditure but higher accuracy of the route selection process. Contrary, small sectors and greater thickness of layers means low reporting expenditure but lower accuracy of the route selection process.

In an advantageous embodiment the selection rule for selecting the subset of communication links for which measurement reports are sent correspond to the definition that measurement reports are restricted to be sent to the base station for only the communication paths from / to a reporting node to / from a node located in the same sector but one layer below the layer in which the reporting node is located. This avoids sending measurement reports for communication links from or to a node in the same sector and layer since they are very close together such that the link quality should always be very good. Likewise, measurement reports from nodes in distant layers are also avoided. This avoids opening far distance two hop indirect links and prefers multi-hop indirect links.

For the method of scheduling resources it advantageous if the affiliation of a relay node or user equipment node to a sector and/or layer is determined by the base station based on the position in a positioning system reported from the relay node and user equipment node. Since the segmentation of the coverage area corresponds to a segmentation of the geographical area, the position information is appropriate for determining the affiliation to a segment.

It is advantageous if the positioning system used for determining the position of a relay node or user equipment node corresponds to at least one of a satellite navigation system such as Global Positioning System GPS, Global Navigation Satellite System GLONASS, Galileo, Beidou and the like. Normally, cars are equipped with navigation system such that the position information is readily available. Also, user equipment in the form of a smart phone is normally also equipped with a positioning system like GPS.

In another embodiment the segmentation of the coverage area is in the form of layers around the base station. This type of segmentation will be selected if the scheduler in the base station becomes aware that a certain amount of stations are associated with the base station but are not equipped with a positioning system. In this case the affiliation to a layer is determined by the base station based on the measurement reports from the relay nodes and user equipment nodes.

For this embodiment an adapted selection rule corresponds to the definition that the measurement reports are restricted to be sent to the base station for only the communication links from / to a reporting node to / from a node located in a layer one layer below the layer in which the reporting node is located.

In a further advantageous embodiment the base station informs the relay nodes and/or user equipment nodes about their affiliation to a sector and/or layer by means of a broadcast service or inquiry service. The broadcast service has the advantage that the amount of messages which need to be exchanged for informing all stations about their affiliation is lower compared to the inquiry service.

In one embodiment, the broadcast service comprises that the base station transmits one or more broadcast messages with which the relay nodes and/or user equipment nodes will be informed about their affiliation to a sector and/or layer. It is advantageous if the information about all stations could be sent in one broadcast message only. Such message needs to be transmitted periodically or sporadically since the association of stations to a base station is dynamic and changes rapidly under the traffic scenario as mentioned above with lots of moving stations.

For the inquiry service it is advantageous that the base station transmits the affiliation of a relay node and/or user equipment node to a sector and/or layer in a scheduling grant message in response to a scheduling request message from a relay node or user equipment node. This is particularly efficient for the uplink communication direction.

### Drawings

An exemplary embodiment of the present disclosure is shown in the drawing and is explained in greater detail in the following description.

In the drawings:
- Fig. 1: illustrates an example of a mobile network with LTE base station, LTE relay nodes and LTE user equipment nodes;
- Fig. 2: shows the LTE user plane protocol stack;
- Fig. 3: shows the LTE control plane protocol stack;
- Fig. 4: shows the functional entities of the control plane and the radio protocol layers of an LTE base station;
- Fig. 5: illustrates a block diagram of car electronics;
- Fig. 6: illustrates a 1^{st} example of the segmentation of the coverage area of an LTE base station for implementing an efficient measurement reporting scheme according to the invention; and
- Fig. 7: illustrates a 2^{nd} example of the segmentation of the coverage area of an LTE base station for implementing an efficient measurement reporting scheme according to the invention.

### Exemplary embodiments

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

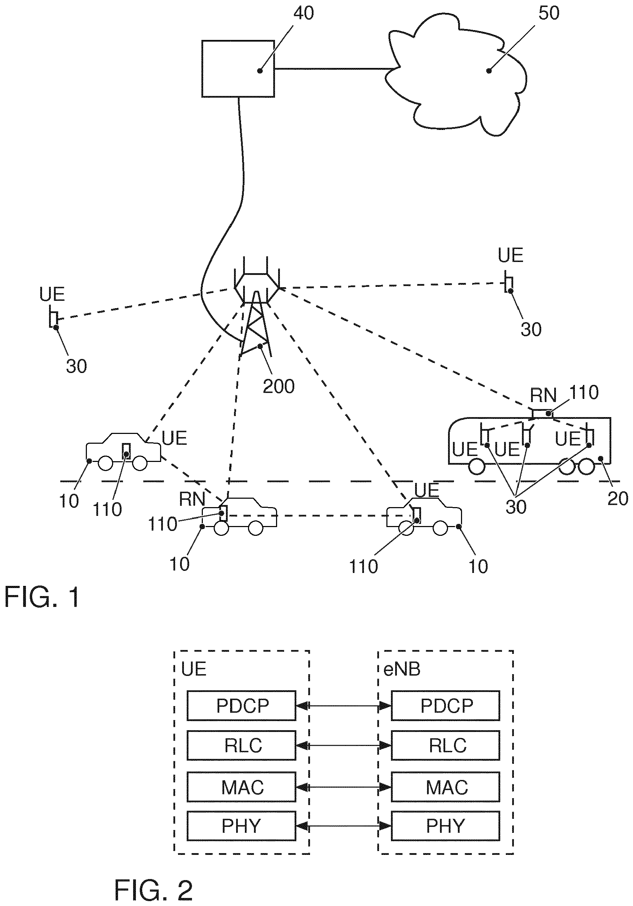

Fig. 1 shows the system architecture for reducing a mobile communication cell to practice. Reference number 200 denotes the base station eNodeB of an LTE mobile communication system. The base station is equipped with a plurality of antennas which may be sector antennas which provide a characteristic for covering an angular section around the base station transceiver 200. In some embodiments, a base station transceiver may, for example cover three sectors of 120° or six sectors of 60° each. Of course, omnidirectional antennas could also be used instead of sector antennas.

The base station 200 in Fig. 1 is positioned close to a main road on which cars 10 and a bus 20 are driving. Of course, other vehicles may also drive on the road. Beside the vehicles on the road the base station 200 serves mobile terminals 30 of users who are walking on pavements, other roads or paths close by the main road. Mobile terminals 30 may also be used inside the vehicles driving on the main road. This is illustrated in Fig. 1 where it is shown that passengers inside the bus 20 are using mobile terminals 30. In the terminology of LTE, a mobile terminal corresponds to user equipment UE which allows a user to access network services, connecting to the UTRAN or E-UTRAN via the radio interface. Typically, such user equipment corresponds to a smart phone. Of course, mobile terminals are also used in the cars 10 or in other vehicles. The cars 10 and the bus 20 are equipped with an on-board unit 110. This on-board unit 110 corresponds to a communication module with which the vehicle can receive mobile data and can send such data.

It is presumed in the following that the on-board units 110 may be configured to operate as relay nodes RN and may be configured to operate as user equipment UE. Fig. 1 depicts that the on-board unit 110 of one car 10 is configured to operate as a relay node RN while the on-board units 110 of the other cars 10 are configured to operate as user equipment UE. The on-board unit 110 of the bus 20 is also configured to operate as a relay node RN. Dashed lines from the base station 200 to the vehicles illustrated the direct communication links to the on-board units 110 of the vehicles and to the mobile terminals 30 outside of the vehicles. Dashed lines between the cars 10 denote a link from the mobile relay RN to the respective cars 10 which are associated with the mobile relay RN. This way there are two alternative links to a car 10 associated with the mobile relay RN, one is the direct link (single hop) from base station 200 to the car 10 and the other is the indirect link (two hops) from base station 200 to mobile relay RN and from mobile relay RN to car 10. Since more cars could be available in the cell, configured as a mobile relay, there could be present also multi-hop indirect links for communication to user equipment UE. The mobile terminals inside the bus 20 may also be served on direct link (not shown) and indirect link via mobile relay RN.

More generally, the Evolved Universal Terrestrial Radio Acess Network E-UTRAN of LTE consists of a plurality of eNodeBs, providing the E-UTRA user plane (PDCP/RLC/MAC/PHY) and control plane (RRC) protocol terminations towards the UE. The eNodeBs are interconnected with each other by means of the so-called X2 interface. The eNodeBs are also connected by means of the so-called S1 interface to the EPC (Evolved Packet Core), more specifically to the MME (Mobility Management Entity) by means of the S1-MME and to the Serving Gateway (S-GW) by means of the S1-U interface.

From this general architecture Fig. 1 shows that eNodeB 200 is connected to the EPC 40 via the S1 interface and that EPC 40 is connected to the Internet 50. The S1 interface may be reduced to practice with wireless communication technology such as with the help of microwave radio communication by means of directional antennae or wired communication technology based on fiber cables.

The various interfaces of the LTE network architecture are standardized. It is particularly referred to the various LTE specifications which are publicly available.

For efficient heterogeneous network planning, 3GPP in the fourth generation of mobile communication also called LTE-Advanced has introduced the concept of Relay Nodes RNs. The Relay Nodes are low power eNodeBs that provide enhanced coverage and capacity at cell edges. One of the main benefits of relaying is to provide extended LTE coverage in targeted areas at low cost.

The relay node functionality is specified in the existing 4G LTE Standard. It is expressively referred to the specification ETSI TS 136 216 V13.0.0 (2016-01); Universal Mobile Telecommunications System (UMTS); LTE; Evolved Universal Terrestrial Radio Access (E-UTRA); Physical layer for relaying operation (3GPP TS 36.216 version 13.0.0 Release 13).

The relay node is wirelessly connected to the radio access network via a donor eNodeB (DeNB). The relay node is connected to the DeNB via radio interface Un, a modified version of E-UTRAN air interface Uu. With the help of relay nodes, the radio link between the base station and the UE is divided into two hops. The link between the eNodeB and the relay node is referred to as the backhaul link, while the link between the relay node and the UE is referred to as the access link. Both the backhaul link and the access link are expected to have better propagation conditions than the direct link.

For the alternative solution based on tunneling protocol it is referred to the description in WO 2012/070 044 A1.

Two types of RNs have been defined in 3GPP LTE-Advanced: Type-1 relay and Type-2 relay. Specifically, from the UE viewpoint, the Type-1 relay appears as a regular eNodeB, it has its own cell ID, synchronization, broadcast, and control channels. It can be used to either extend the coverage or improve the capacity.

In contrast, the Type-2 relay has not been standardized yet and only received a functional description from 3GPP technical reports. A Type-2 relay can transmit data on the LTE Physical Downlink Shared CHannel (PDSCH), but it does not have a separate physical cell ID. This is the main downlink data-bearing channel in LTE. It is used for all user data, as well as for broadcast system information which is not carried on the Physical Broadcast CHannel (PBCH), and for paging messages. The terminals served by the Type-2 relay get the control signaling via the Physical Downlink Control CHannel (PDCCH) from the eNodeB, which means that the terminals should be located within the coverage area of an eNodeB. Type-2 relays are mainly designed to improve the capacity for certain hot spot areas. A downlink control channel is used to support efficient data transmission in LTE. A PDCCH carries a message known as Downlink Control Information (DCI), which includes transmission resource assignments and other control information for a UE or group of UEs. In other words, a Type-2 relay can help a local UE node, which is located within the coverage area of an eNodeB and has a direct communication link with the eNodeB, to improve its service quality and link capacity. So a Type-2 RN does not transmit the common reference signal or control information, and its main objective is to increase the overall system capacity by achieving multipath diversity and transmission gains for the local UE node. The Type-1 RN is operated in the so-called non-transparent mode. In this mode the RN transmits both signaling information and user traffic. A Type-2 RN is operated in transparent mode. In this mode only user traffic is transmitted by the relay node and the eNodeB remains responsible for signaling transmission.

For the traffic scenario which has been described in the consistory clause of the application, the adequate relay node type to fulfill the needs is the Type-2 relay node. Therefore, in the following it is assumed that car 10 and bus 20 of Fig. 1 are equipped with a Type-2 relay node.

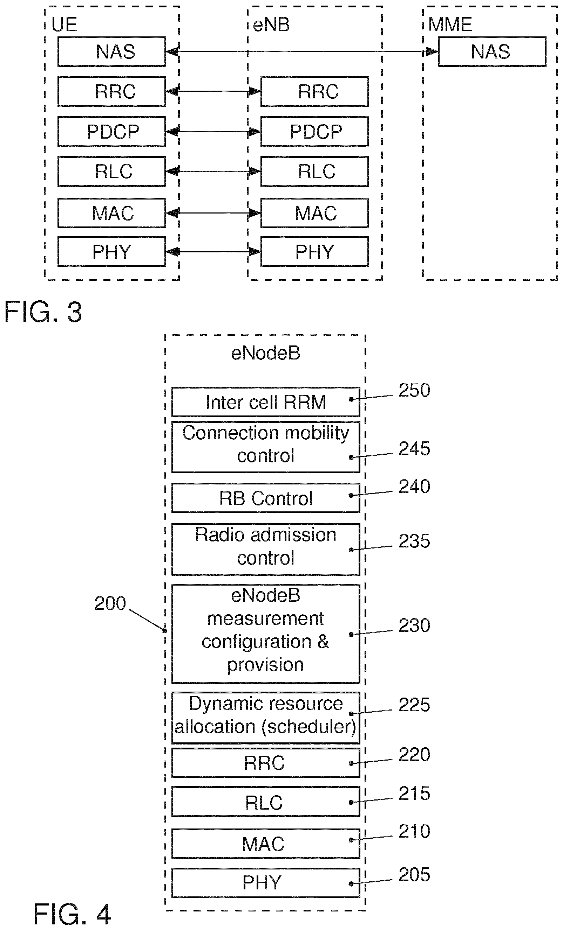

Fig. 2 shows the LTE user plane protocol stack and Fig. 3 shows the LTE control plane protocol stack. The different protocol layers are Physical layer PHY, Medium Access layer MAC, Radio Link Control layer RLC and, Packet Data Convergence Protocol layer PDCP for the LTE user plane. For the LTE control plane the layers Radio Resource Control RRC and Non-Access Stratum NAS are on top of the PDCP layer. The two figures Fig. 2 and Fig. 3 are taken from the LTE standard. For more details concerning the different layers, it is referred to the specification ETSI TS 136 300 V12.9.0 (2016-04); LTE; Evolved Universal Terrestrial Radio Access (E-UTRA) and Evolved Universal Terrestrial Radio Access Network (E-UTRAN); Overall Description; Stage 2 (3GPP TS 36.300 version 12.9.0 Release 12).

The task of allocating transmission resources is reserved to a scheduler who corresponds to a management unit inside a base station eNodeB. Fig. 4 shows a protocol stack of such a base station eNodeB. With reference number 200 the whole protocol stack with the different layers is denoted. Reference number 205 refers to the Physical Layer (Layer 1) of the ISO/OSI 7-layer model of data communication. The Data Link Layer (Layer 2) in LTE is comprised of the sublayers 210 Medium Access Control layer, 215 Radio Link Control layer und 220 Radio Resource Control layer. Above that the functionality of the Network Layer (Layer 3) is provided by the above mentioned scheduler component, i.e. the management unit which is responsible for resource allocation. This component has reference number 225. Above it there is a layer 230 which is responsible for evaluating measurement reports from the various stations associated with the base station and performs configuration of the network. With reference number 235 a Radio Admission Control Layer RAC is denoted. Above it an RBC layer corresponding to Radio Bearer Control layer has reference number 240. Further above are the layers Connection Mobility Control CMC 245 and Inter Cell Radio Resource Management RRM 250. The different layers and sub-layers shown in Fig. 4 are described in the standard. It is referred to the specification ETSI TS 136 211 V13.1.0. with the title LTE; Evolved Universal Terrestrial Radio Access (E-UTRA); Physical Channels and Modulation (3 GPP TS 36.211 Virgin 13.1.0 Release 13).

Of further interest for the subject application are the layers Dynamic Resource Allocation, which corresponds to the scheduler 225 and the layer 230 for evaluating measurement reports and performing configuration. Therefore in the following further explanation is provided mainly to these two components. Regarding the other layers it is expressively referred to the LTE standard for further details also in view of the disclosure of the invention.

In the concept with mobile relaying for fulfilling the task of resource allocation the scheduler 225 first needs to determine the route the data shall be transported to a user equipment node requesting a downlink or uplink data transport. The aim is to find the route with the best spectral efficiency to optimize the throughput in the cell. For finding such routes, the LTE E-UTRAN specification contains a plurality of techniques related to channel quality measurements.

For each measurement type a measurement identity is used by E-UTRAN when configuring measurements as well as by the UE when reporting results of the measurements. Measurement quantities and reporting events are considered separately for each measurement type. Measurement commands are used by E-UTRAN to order the UE to start measurements, modify measurements or stop measurements. Three reporting criteria are used: event triggered reporting, periodic reporting and event triggered periodic reporting.

At PDCP/RLC/MAC level the UE reports channel quality information and feedback information to eNodeB.

At the RRC Layer: The RRC protocol layer exists in a user equipment node UE and in the base station eNodeB, this protocol is part of the LTE air interface control plane. Among other tasks the RRC layer is also responsible for QoS management functions and the UE measurement reporting and the control of the measurement reporting. Dedicated measurement reporting messages in the LTE standard are:
- CQI Channel Quality Indicator. This information is signaled by a UE to the base station to indicate a suitable data rate (typically a Modulation and Coding Scheme (MCS) value) for downlink transmissions, usually based on a measurement of the received downlink Signal to Interference plus Noise Ratio (SINR) and knowledge of the UE's receiver characteristics.
- RSSI Received Signal Strength Indicator. This is a measurement report defined as the total received wideband power observed by a UE from all sources, including cochannel serving and non-serving cells, adjacent channel interference and thermal noise within the measurement bandwidth. For LTE it is not reported as an independent measurement, but is an input to the derivation of an RSRQ message.
- RSRQ Reference Signal Received Quality. RSRQ message is an LTE measurement report which provides a cell-specific signal quality metric. Similarly to Reference Signal Received Power (RSRP), this measurement is mainly used to rank different LTE cells according to their signal quality as an input for handover and cell reselection decisions, for example in scenarios for which RSRP measurements do not provide sufficient information to perform reliable mobility decisions. The RSRQ is defined as the ratio N x RSRP/(LTE carrier RSSI), where N is the number of Resource Blocks (RBs) of the LTE carrier Received Signal Strength Indicator (RSSI) measurement bandwidth. While RSRP is an indicator of the wanted signal strength, RSRQ additionally takes the interference level into account due to the inclusion of RSSI. RSRQ therefore enables the combined effect of signal strength and interference to be reported in an efficient way. If the UE is equipped with multiple antennas, the reported RSRQ value is not permitted to be lower than the RSRQ computed on the individual branches.
- RI Rank Indicator. A rank indicator is signalled to the eNodeB by UEs configured for Physical Downlink Shared CHannel (PDSCH) transmission modes 3 (open-loop spatial multiplexing) and 4 (closed-loop spatial multiplexing). It corresponds to the number of useful transmission layers for spatial multiplexing (based on the UE's estimate of the downlink channel). This measurement report message enables the eNodeB to adapt the PDSCH transmissions accordingly.
- PMI Precoding Matrix Indicator. A signal fed back by the UE to support Multiple-Input Multiple-Output (MIMO) operation. It corresponds to the index of the precoder (within a codebook shared by the UE and eNodeB) that maximizes the aggregate number of data bits which could be received across all downlink spatial transmission layers.

More information about such measurement reporting messages is found in ETSI TS 136 213 V13.1.0. with the title LTE; Evolved Universal Terrestrial Radio Access (E-UTRA); Physical Layer Procedures (3 GPP TS 36.213 Version 13.0.0 Release 13).

These types of measurement reports in each case provide information about the direct link between ENodeB and UE. As mentioned before, under the conception of mobile relaying, there are a number of indirect links opened via which data could be transported. Therefore under this conception there is a need to send measurement reports for indirect links, too. UEs need to send measurement reports for the link from relay node RN to user equipment node UE and the relay nodes would need to report about the link from another relay node RN to them. This is impractical for the dynamic traffic scenario as explained above.

According to the invention the measurement reporting scheme will be differently organized. The scheduler 225 in eNodeB will determine for which links he wants to receive measurement reports. This is only a subset of all possible links. Thereby the amount of measurement reports is drastically reduced. To do this, the scheduler 225 performs a segmentation of the coverage area of the base station 200.

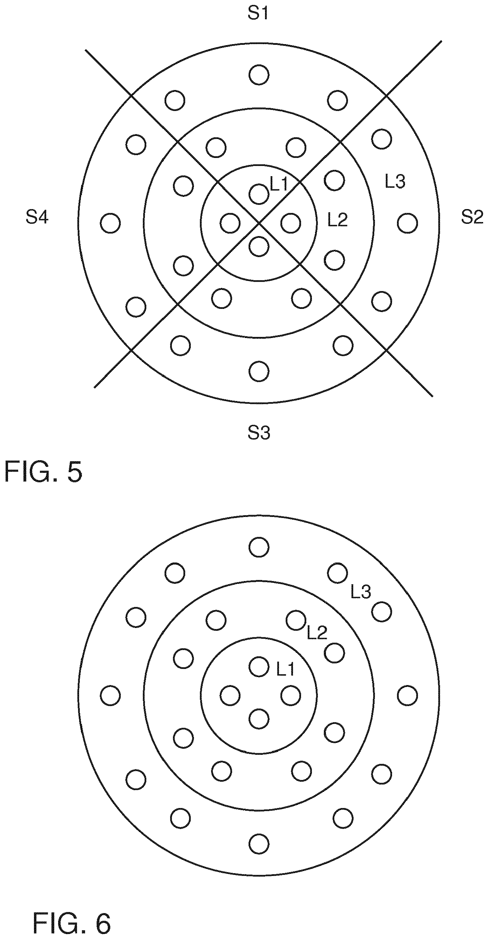

In a first embodiment of the disclosure the coverage area will be divided into sectors and layers. This is illustrated in Fig. 5. Fig. 5 shows the coverage area of the base station 200. The position of the base station is in the center of the concentrically circles shown in the figure. The mobile terminals RNs and UEs are distributed around the base station 200 indicated with small circles. Four sectors S1 to S4 are depicted in the drawing having each an angular section of 90° indicated by two straight lines having an intersection point at the center of the coverage area. Other angular sections may be used instead. Further typical examples are angular sections of 60° and 120° for that with sector antennas such angular coverage areas can be easily reduced to practice. With concentrically circles the borders of the different layers are marked. Layer L1 is close to the base station. Layer L2 is in mid-size distance from the base station and layer L3 is further away from the base station but still in the coverage area of the base station 200. This type of segmentation is an example and in other embodiments a different segmentation with different amount of sectors and layers and/or different shape of sectors and layers might be used.

Base station 200 then needs to inform each station in the cell be it a relay node RN or user equipment UE about its affiliation to a sector and layer. This task can best be performed if base station 200 knows the geographical position of each station in the cell. Since modern smart phones and cars/vehicles normally are equipped with GPS receiver, this assumption is not beside the point. Also, the reporting of position information is supported in the LTE standard.

An UE positioning function is required to provide the mechanisms to support or assist the calculation of the geographical position of a UE. The UE position can be used, for example, in support of Radio Resource Management functions, as well as location-based services for operators, subscribers, and third-party service providers, too.

The position information may be requested by and reported to a client (e.g., an application) associated with the UE, or by a client within or attached to the core network. The position information is reported in standard formats, such as those for cell-based or geographical coordinates, together with the estimated errors (uncertainty) of the position and velocity of the UE and, if available, the positioning method (or the list of the methods) used to obtain the position information.

The standard positioning methods supported for E-UTRAN access are:
- network-assisted GNSS (Global Navigation Satellites Systems) methods
- downlink positioning
- enhanced cell ID method.
Hybrid positioning using multiple methods from the list of positioning methods above is also supported.

LPP is an LTE positioning protocol which acts as a method-agnostic supporting protocol for various UE positioning methods such as:
- OTDOA (Observed Time Difference Of Arrival). This is a downlink positioning method based on measured time differences observed by the UE from different eNodeBs)
- GNSS (Global Navigation Satellite System). This is a general term for a satellite-based positioning system, consisting of a network of satellites transmitting highfrequency radio signals that can be picked up by a receiver and used to determine its location. Examples include the Global Positioning System GPS, Global Navigation Satellite System GLONASS, Galileo, Beidou and the like.
- Enhanced Cell ID methods (cell level).

The base station 200 therefore collects all the position information from the stations in the cell and informs the stations based on the position information and the topology of the coverage area segmentation about their affiliation to a sector and layer.

In one embodiment the base station will provide a broadcast service with which the stations will be informed about their affiliation to a sector and/or layer. The broadcast message will deliver for each of the associated stations identified with a node identifier a 2-tuple of information in the form (Sx,Ly) about sector and layer affiliation for this station. The broadcast message can be transported via the PDCCH channel. All stations will record this broadcast message and set up a data base in which it is listed which station is located in which sector and/or layer such that the station is aware of the affiliation of its communication partner station to a segment of the coverage area.

In a second embodiment the base station eNodeB provides an inquiry service. This service is based on a simple request response protocol. A station will request the information about the segment in which the station is located from the base station in a request message. The base station will respond to this inquiry in a response message in which a 2-tuple of information in the form (Sx,Ly) will be made available for each station. In one embodiment the request message could be identical with or based on the message in which the station informs the base station 200 about its geographical position. The base station 200 would respond to the position information message with the 2-tuple location information about sector and layer for this station.

In one embodiment the measurement reporting scheme will be organized in the following form: The basic idea for the reorganization is that measurement reports will only be sent from a mobile station for a link between this mobile station and another mobile station if the two stations are located in the same sector S1 to S4. Another presumption is that a mobile station will only submit measurement reports if the partner station is located in the same sector S1 to S4 but one layer below the layer L1 to L3 to which it belongs itself, i.e. for a station which is closer to the base station 200. For example a mobile station located in sector S1 and layer L3 would only send measurement reports for the stations in sector S1 and layer L2. A station in sector S4 and layer L2 would only send measurement reports for the stations in sector S4 and layer L1. The stations located in sectors S1 to S4 and layer 1 would not send measurement reports for links other than the direct link to the base station 200. It is denoted that all stations would deliver measurement reports for the direct link to the base station 200.

The knowledge about the affiliation of the other stations to a sector and or layer in the inquiry service is derived in one embodiment of the disclosure in a direct communication between the stations, this can be done with the help of sidelink communication. In such a sidelink communication the two stations exchange the information about their affiliation to a segment, i.e. Sx and Ly information.

Next it is assumed that the base station 200 needs to send data to a mobile station 10, 20, 30, i.e. downlink direction. The scheduler 225 in base station 200 now has the task to select the most efficient route to the mobile station 10, 20, 30. The result could be to take the direct link or to take an indirect link via one or more relay node RN. This task will be performed with the help of the collected measurement reports from the different mobile stations. To figure out which link is the most efficient link, the spectral efficiency may be used as a criterion. For example if in the measurement reports a spectral efficiency of 15 bit/s/Hz had been reported and there is a 2-hop indirect link available with 30 bit/s/Hz for the first hop and 20 bit/s/Hz for the second hop, then the overall spectral efficiency of the indirect link would be smaller than 15 bit/s/Hz because only if there is a spectral efficiency of 30 bit/s/Hz on both hops, there is a resulting overall spectral efficiency of 15 bit/s/Hz since two data frames need to be filled for the 2-hop indirect link whereas on the direct link there is only one data frame needed for the same result. This way, it can easily be estimated if the direct link or indirect link provide for a more efficient data transport. For a 2-hop indirect link the rule is: Take the spectral efficiency of the direct link, multiply it by two and see if the spectral efficiencies on both hops of the direct link are higher than then the doubled spectral efficiency of the direct link. If yes, then the route of the indirect link should be selected for downlink communication to the mobile station. Otherwise, the direct link should be selected. For a 3-hop indirect link the estimation is accordingly and the spectral efficiency of the direct link needs to be multiplied by three. For an N-hop indirect link it needs to be multiplied by N.

After selecting the most efficient route the scheduler 225 allocates the transmission resources according to the selected route. For a 2-hop indirect link the scheduler 225 needs to allocate the resources two times for the two hops. A resource allocation normally is valid for one transmission time interval TTI. The mobile stations listen for resource allocations to them announced on the Physical Downlink Control CHannel PDCCH.

For the uplink direction resource allocation is similar. First, the mobile station which wants to send uplink data sends a scheduling request on the Physical Uplink Control CHannel PUCCH to the base station via the direct link. The base station 200 selects the route as explained above and responds with an uplink scheduling grant message on the PDCCH channel. In this scheduling grant message the information about the route to be taken is added. The scheduling grant message comprises the information which station may use which transmission resources (frequency slot, time slot, resource block, timing advance). All this is part of the LTE specification. Also for relaying, the scheduling grant messages are enhanced. In this case the whole chain of relay hops need to be covered by the scheduling grant message. As an alternative a separate message following the scheduling grant message is sent to the mobile station 10, 20, 30. Again, after selecting the most efficient route the scheduler 225 allocates the transmission resources according to the selected route.

Next, it is considered the case where there is a plurality of mobile stations 10, 20, 30 in the coverage area of a base station 200 not having means for determining the exact geographical position. If there is a certain amount of stations in the coverage area of the base station 200 not being aware of the exact geographical position, the base station 200 could react accordingly and use a modified version of segmenting the coverage area. The base station would not divide the coverage area into sectors but would perform segmentation into layers only. This is because the affiliation into angular sectors is difficult if no directional antennas are used at the base station. Fig. 6 shows the segmentation of the coverage area into layers L1 to L3, only. The determination about a mobile station's affiliation to a layer is possible by evaluating the evolution of the measuring reports for a given mobile station over time. The base station eNodeB would estimate the affiliation of a user equipment node to a layer based on the values in the measurement reports. E.g. a bigger reported receiving signal strength means the reporting node is closer to the base station and vice versa.

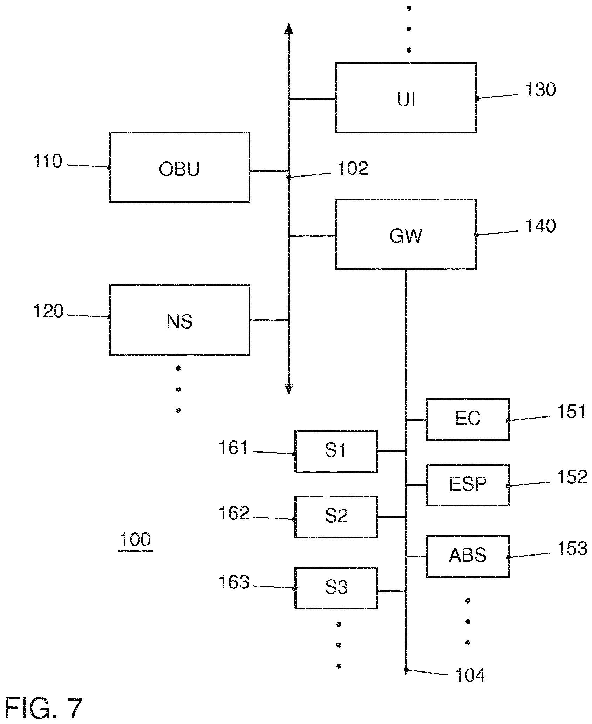

Fig. 7 illustrates an exemplary block diagram of car electronics. With reference number 151 an engine control unit is referred. Reference number 152 denotes an anti slippery control unit and reference number 153 a braking control unit. Further controllers like transmission control, airbag control etc. are normally available in the car. The linking of such control devices is typically done with the CAN bus system (Controller Area Network) 104 which is standardized as ISO standard, ISO 11898. As various sensors are installed in the vehicle and they are no longer connected only to individual control units, such sensor data is also transmitted via the bus system 104 to the individual control devices. Examples of sensors in the vehicle are wheel speed sensors, steering angle sensors, accelerometers, gyroscopes, tire pressure sensors, proximity sensors, etc. The various sensors, with which the vehicle is equipped, are identified in Fig. 7 by the reference numerals 161, 162, 163.

The modern motor vehicle can also contain further components such as video cameras, for example, as a rear camera, or as a driver monitoring camera and a radar device for the realization of a radar cruise control or for realizing a distance - or collision warning device.

The motor vehicle may be further equipped with other electronic devices. These are more arranged in the region of the passenger cell and are often operated by the driver. Examples are a user interface device with which the driver selects drive modes, but can also operate classical components. These include gear selection as well as turn signal control, windscreen wiper control, lighting control, etc. This user interface device is identified by the reference number 130. The user interface device 130 is often also equipped with a rotary / pressure switch, with which the driver can select different menus that are displayed on a display in the cockpit. On the other hand, a touch-sensitive display falls into this category, too. Even the voice control for the operator support falls within this range.

Distinguished therefrom is often a navigation system 120, which is also installed in the cockpit area. The position information used in the subject application will be made available by the navigation system 120. Other components, such as a speakerphone may be present but are not shown in detail. Reference numeral 110 denotes an on-board unit. This on-board unit 110 corresponds to a communication module by means of which the vehicle can receive and send mobile data. Typically, this is a cellular communication module, e.g. according to the LTE standard.

The devices of the passenger compartment are also linked to each other via a bus system, which is referred to by the reference numeral 102. This bus system may, for example be the Infotainment CAN bus system, but here in the variant for data transmission with higher data rate between infotainment devices. For purpose, to submit the vehicle-relevant sensor data from the communication interface 110 to another vehicle or to a central computer, the gateway 140 is provided. This is connected to the two different bus systems 102 and 104. The gateway is designed to convert the data that it receives via the CAN bus 104 into the transmission format of the infotainment CAN bus 102 so that they can be distributed in the there specified packages. For the forwarding of this data to an external device i.e. to another car or to a central computer, the on-board unit 110 is equipped with communication interface to receive these data packets and in turn put into the transmission format of a mobile phone standards accordingly employed.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

The disclosure is not restricted to the exemplary embodiments described here. There is scope for many different adaptations and developments which are also considered to belong to the disclosure.

### Reference Sign List

- 10: Car
- 20: Bus
- 30: User Equipment Node
- 40: Evolved Packet Core
- 50: Internet
- 100: Block Diagramm Car Electronics
- 102: Infotainment CAN-Bus
- 104: CAN-Bus
- 110: On-Board Unit
- 120: Navigation System
- 130: User Interface
- 140: Gateway
- 151: Engine Control Unit
- 152: ESP Control Unit
- 153: Brake Control Unit
- 161: Sensor 1
- 162: Sensor 2
- 163: Sensor 3
- 200: Relay Node
- 205: PHY Layer
- 210: MAC Layer
- 215: RLC Layer
- 220: RRC Layer
- 225: Scheduler
- 230: Measurement Configuration & Provision Unit
- 235: RAC Layer
- 240: RBC Layer
- 245: CMC Layer
- 250: RRM Layer
- RN: Relay Node
- UE: User Equipment
- S1 to S4: Sector
- L1 to L3: Layer

## Claims

1. Method for route selection in a mobile communication system, comprising a base station (200) connected to one or more relay node (RN) and one or more user equipment node (UE) directly over a single hop communication route and via one or more relay nodes (RN) over a multi-hop communication route, wherein a user equipment node (UE) sends to the base station (200) one or more measurement reports concerning the channel quality of the direct communication link, wherein further the position is reported from the one or more relay node (RN) and one or more user equipment node (UE) to the base station (200), wherein said base station (200) performs a segmentation of its coverage area by using a plurality of sector antennas or by segmenting the coverage area into a plurality of geographical areas and wherein the base station determines the affiliation of each of said one or more user equipment nodes (UE) and each of said one or more relay nodes (RN) in its coverage area to a segment, based on their reported geographical position, wherein said base station (200) informs the relay nodes (RN) and user equipment nodes (UE) about the affiliation of all relay nodes and user equipment nodes in the coverage area to a segment, and wherein the relay nodes (RN) and/or user equipment nodes (UE) send further measurement reports to the base station (200) only for a subset of all further communication links between a relay node (RN) and the reporting user equipment node (UE) or between another relay node and the reporting relay node (RN), wherein the selection of the subset is performed in the one or more relay node (RN) or one or more user equipment node (UE) according to the criterion if both nodes of a respective further communication link are located in the same segment, wherein the base station (200) determines a single-hop or multi-hop communication route for the communication with the reporting user equipment (UE) based on an evaluation of the channel qualities reported in the measurement reports and further measurements reports and informs the reporting user equipment node (UE) or the reporting relay node (RN) about the single-hop or multi-hop communication route to be taken for the communication with a reporting user equipment node (UE) or relay node (RN).

2. Method according to claim 1, wherein the segmentation of the coverage area is in the form of angular sectors (S1 to S4) and circular and ring form layers (L1 to L3) around the base station (200).

3. Method according to claim 2, wherein the selection of the subset is performed in the one or more relay node (RN) or one or more user equipment node (UE) by the definition that measurement reports are restricted to be sent to the base station (200) for only the communication paths from / to a reporting node to / from a node located in the same sector (S1 to S4) but one layer (L1, L2) below the layer (L2, L3) in which the reporting node is located, where the numbering of the layers starts with the layer in which the base station (200) is located in the center.

4. Method according to one of claims 2 or 3, wherein the affiliation of a relay node (RN) or user equipment node (UE) to a sector (S1 to S4) and/or layer (L1 to L3) is determined by the base station (200) based on the position in a positioning system reported from the relay node (RN) and user equipment node (UE).

5. Method according to claim 4, wherein the positioning system used for determining the position of a relay node (RN) or user equipment node (UE) corresponds to at least one of a satellite navigation system such as Global Positioning System GPS, Global Navigation Satellite System GLONASS, Galileo, Beidou and the like.

6. Method according to claim 1, wherein the segmentation of the coverage area is in the form of layers (L1 to L3) around the base station (200).

7. Method according to claim 6, wherein the affiliation to a layer (L1 to L3) is determined by the base station (200) based on the measurement reports from the relay nodes (RN) and user equipment nodes (UE).

8. Method according to claim 6 or 7, wherein the selection rule corresponds to the definition that the measurement reports are restricted to be sent to the base station (200) for only the communication links from / to a reporting node to / from a node located in a layer one layer below the layer in which the reporting node is located.

9. Method according to one of the claims 2 to 8, wherein the base station (200) informs the relay nodes (RN) and/or user equipment nodes (UE) about their affiliation to a sector (S1 to S4) and/or layer (L1 to L3) by means of a broadcast service or inquiry service.

10. Method according to claim 9, wherein the broadcast service comprises that the base station (200) transmits one or more broadcast messages with which the relay nodes (RN) and/or user equipment nodes (UE) will be informed about their affiliation to a sector (S1 to S4) and/or layer (L1 to L3).

11. Method according to claim 9, wherein the inquiry service comprises that the base station (200) transmits the affiliation of a relay node (RN) and/or user equipment node (UE) to a sector (S1 to S4) and/or layer (L1 to L3) in a scheduling grant message in response to a scheduling request message from a relay node (RN) or user equipment node (UE).

12. Base station (200) adapted for the use in the method according to one of the previous claims, comprising receiving and evaluation means (230) adapted to receive and evaluate measurement reports from a reporting relay node (RN) and/or reporting user equipment node (UE) directly over a single-hop communication route and further measurement reports via one or more relay nodes (RN) over a multi-hop communication route and further comprising scheduling means (225), comprising means for performing a segmentation of the base station coverage area by using a plurality of sector antennas or by segmenting the coverage area into a plurality of geographical areas, further comprising means for performing a step of determining the affiliation of each of said one or more user equipment node (UE) and each of said one or more relay nodes (RN) in its coverage area to a segment based on their reported geographical position and means for performing a step of informing the relay nodes (RN) and/or user equipment nodes (UE) about the affiliation of all relay nodes (RN) and user equipment nodes (UE) to a segment, wherein said receiving and evaluation means receive further measurement reports only for a subset of all further communication links between a relay node (RN) and the reporting user equipment node (UE) or between another relay node and the reporting relay node (RN), wherein the selection of the subset is performed in the relay node (RN) and the user equipment (UE) according to the criterion if both nodes of a respective further communication link are located in the same segment and further comprising means for determining a single-hop or multi-hop communication route for the communication with a user equipment node (UE) or relay node (RN) based on an evaluation of the channel qualities reported in the measurement reports and further measurements reports and further comprising means for informing the user equipment node (UE) or the relay node (RN) about the single-hop or multi-hop communication route to be taken for the communication with said user equipment node (UE) or relay node (RN).

13. Relay node (RN) adapted for the use in the method according to one of the claims 1 to 11, comprising means for sending one or more measurement reports to a base station (200) concerning the channel quality of a communication link over a single-hop communication route between said base station (200) and the reporting relay node (RN) and further comprising means for sending one or more further measurement reports to the base station (200) concerning the channel quality of further communication links from another relay node (RN) to the reporting relay node (RN), over a multi-hop communication route, further comprising a step of receiving from said base station (200) an information about the affiliation of all relay nodes (RN) and user equipment nodes (UE) in the coverage area of the base station (200) to a segment of the coverage area, wherein the means for sending further measurement reports are adapted to send these further measurement reports only for a subset of all its communication links to other relay nodes, wherein the relay nodes (RN) comprise means for selecting a subset of all further communication links between another relay node and the reporting relay node (RN), on which further measurement reports are sent to the base station (200), wherein the selection of the subset is performed in the relay node (RN) according to the criterion if both nodes of a respective further communication link are located in the same segment.

14. User equipment node (UE) adapted for the use in the method according to one of the claims 1 to 11, comprising means for sending one or more measurement reports concerning the channel quality of the single-hop communication link to a base station (200) and comprising means for sending one or more further measurement reports to the base station (200) concerning the channel quality of further communication links from a relay node (RN) to the reporting user equipment node (UE), further comprising a step of receiving from said base station (200) an information about the affiliation of all relay nodes (RN) and user equipment nodes (UE) in the coverage area of the base station (200) to a segment of the coverage area, and wherein the means for sending further measurement reports are adapted to send these further measurement reports only for a subset of all its communication links to relay nodes, wherein the user equipment nodes (UE) comprise means for selecting a subset of all further communication links between a relay node (RN) and the reporting user equipment node (UE) on which further measurement reports are sent to the base station (200), wherein the selection of the subset is performed in the user equipment node (UE) according to the criterion if both nodes of a respective further communication link are located in the same segment.

## Patentansprüche

1. Verfahren zur Wegauswahl in einem mobilen Kommunikationssystem, umfassend eine Basisstation (200), die mit einem oder mehreren Relaisknoten (RN) und einem oder mehreren Benutzereinrichtungsknoten (UE) direkt über einen Single-Hop-Kommunikationsweg und über einen oder mehrere Relaisknoten (RN) über einen Multi-Hop-Kommunikationsweg verbunden ist, wobei ein Benutzereinrichtungsknoten (UE) einen oder mehrere Messberichte bezüglich der Kanalqualität der direkten Kommunikationsverbindung an die Basisstation (200) sendet, wobei ferner die Position von dem einen oder den mehreren Relaisknoten (RN) und dem einen oder den mehreren Benutzereinrichtungsknoten (UE) an die Basisstation (200) berichtet wird, wobei die Basisstation (200) eine Segmentierung ihres Abdeckungsbereichs durch Verwendung einer Vielzahl von Sektorantennen oder durch Segmentieren des Abdeckungsbereichs in eine Vielzahl von geografischen Bereichen durchführt, und wobei die Basisstation die Zugehörigkeit von jedem der einen oder mehreren Benutzereinrichtungsknoten (UE) und jedem der einen oder mehreren Relaisknoten (RN) in ihrem Abdeckungsbereich zu einem Segment basierend auf deren berichteten geografischen Positionen bestimmt, wobei die Basisstation (200) die Relaisknoten (RN) und die Benutzereinrichtungsknoten (UE) über die Zugehörigkeit aller Relaisknoten und Benutzereinrichtungsknoten in dem Abdeckungsbereich zu einem Segment informiert, und wobei die Relaisknoten (RN) und/oder die Benutzereinrichtungsknoten (UE) weitere Messberichte an die Basisstation (200) nur für eine Teilmenge aller weiteren Kommunikationsverbindungen zwischen einem Relaisknoten (RN) und dem berichtenden Benutzereinrichtungsknoten (UE) oder zwischen einem anderen Relaisknoten und dem berichtenden Relaisknoten (RN) senden, wobei die Auswahl der Teilmenge in dem einen oder den mehreren Relaisknoten (RN) oder dem einen oder den mehreren Benutzereinrichtungsknoten (UE) gemäß dem Kriterium durchgeführt wird, ob sich beide Knoten einer jeweiligen weiteren Kommunikationsverbindung in dem gleichen Segment befinden, wobei die Basisstation (200) einen Single-Hop- oder Multi-Hop-Kommunikationsweg für die Kommunikation mit der berichtenden Benutzereinrichtung (UE) basierend auf einer Auswertung der Kanalqualitäten, die in den Messberichten und weiteren Messberichten berichtet werden, bestimmt und den berichtenden Benutzereinrichtungsknoten (UE) oder den berichtenden Relaisknoten (RN) über den Single-Hop- oder Multi-Hop-Kommunikationsweg, der für die Kommunikation mit einem berichtenden Benutzereinrichtungsknoten (UE) oder Relaisknoten (RN) genommen werden soll, informiert.

2. Verfahren nach Anspruch 1, wobei die Segmentierung des Abdeckungsbereichs in Form von Winkelsektoren (S1 bis S4) und kreisförmigen und ringförmigen Schichten (L1 bis L3) um die Basisstation (200) herum erfolgt.

3. Verfahren nach Anspruch 2, wobei die Auswahl der Teilmenge in dem einen oder den mehreren Relaisknoten (RN) oder dem einen oder den mehreren Benutzereinrichtungsknoten (UE) durch die Definition durchgeführt wird, dass Messberichte nur für die Kommunikationspfade von/zu einem berichtenden Knoten zu/von einem Knoten, der sich in dem gleichen Sektor (S1 bis S4), aber eine Schicht (L1, L2) unterhalb der Schicht (L2, L3) befindet, in der sich der berichtende Knoten befindet, an die Basisstation (200) gesendet werden dürfen, wobei die Nummerierung der Schichten mit der Schicht, in deren Mitte sich die Basisstation (200) befindet, beginnt.

4. Verfahren nach einem der Ansprüche 2 oder 3, wobei die Zugehörigkeit eines Relaisknotens (RN) oder Benutzereinrichtungsknotens (UE) zu einem Sektor (S1 bis S4) und/oder einer Schicht (L1 bis L3) von der Basisstation (200) basierend auf der Position in einem Positionierungssystem bestimmt wird, die von dem Relaisknoten (RN) und dem Benutzereinrichtungsknoten (UE) berichtet wird.

5. Verfahren nach Anspruch 4, wobei das Positionierungssystem zur Bestimmung der Position eines Relaisknotens (RN) oder Benutzereinrichtungsknotens (UE) mindestens einem von einem Satellitennavigationssystem wie dem Global Positioning System GPS, Global Navigation Satellite System GLUNASS, Galileo, Beidou oder dergleichen entspricht.

6. Verfahren nach Anspruch 1, wobei die Segmentierung des Abdeckungsbereichs in der Form von Schichten (L1 bis L3) um die Basisstation (200) herum erfolgt.

7. Verfahren nach Anspruch 6, wobei die Zugehörigkeit zu einer Schicht (L1 bis L3) von der Basisstation (200) basierend auf den Messberichten von den Relaisknoten (RN) und den Benutzereinrichtungsknoten (UE) bestimmt wird.

8. Verfahren nach Anspruch 6 oder 7, wobei die Auswahlregel der Definition entspricht, dass die Messberichte nur für die Kommunikationsverbindungen von/zu einem berichtenden Knoten zu/von einem Knoten, der sich in einer Schicht unterhalb der Schicht befindet, in der sich der berichtende Knoten befindet, an die Basisstation (200) gesendet werden dürfen.

9. Verfahren nach einem der Ansprüche 2 bis 8, wobei die Basisstation (200) die Relaisknoten (RN) und/oder Benutzereinrichtungsknoten (UE) über ihre Zugehörigkeit zu einem Sektor (S1 bis S4) und/oder einer Schicht (L1 bis L3) mittels Broadcast-Dienst oder Anfrage-Dienst informiert.

10. Verfahren nach Anspruch 9, wobei der Broadcast-Dienst umfasst, dass die Basisstation (200) eine oder mehrere Broadcast-Nachrichten überträgt, mit denen die Relaisknoten (RN) und/oder Benutzereinrichtungsknoten (UE) über ihre Zugehörigkeit zu einem Sektor (S1 bis S4) und/oder Schicht (L1 bis L3) informiert werden.

11. Verfahren nach Anspruch 9, wobei der Anfrage-Dienst umfasst, dass die Basisstation (200) die Zugehörigkeit von einem Relaisknoten (RN) und/oder Benutzereinrichtungsknoten (UE) zu einem Sektor (S1 bis S4) und/oder einer Schicht (L1 bis L3) in einer Planungszuteilungsnachricht in Reaktion auf eine Planungsanforderungsnachricht von einem Relaisknoten (RN) oder Benutzereinrichtungsknoten (UE) überträgt.

12. Basisstation (200), die zur Verwendung in dem Verfahren nach einem der vorstehenden Ansprüche ausgelegt ist, umfassend Empfangs- und Auswertungsmittel (230), die ausgelegt sind, um Messberichte von einem berichtenden Relaisknoten (RN) und/oder berichtenden Benutzereinrichtungsknoten (UE) direkt über einen Single-Hop-Kommunikationsweg und weitere Messberichte über einen oder mehrere Relaisknoten (RN) über einen Multi-Hop-Kommunikationsweg zu empfangen und auszuwerten, und ferner umfassend Planungsmittel (225), die Mittel zum Durchführen einer Segmentierung des Abdeckungsbereichs der Basisstation durch die Verwendung einer Vielzahl von Sektorantennen oder durch Segmentieren des Abdeckungsbereichs in eine Vielzahl von geografischen Bereichen umfassen, ferner umfassend Mittel zum Durchführen eines Schritts zur Bestimmung der Zugehörigkeit von jedem der einen oder mehreren Benutzereinrichtungsknoten (UE) und jedem der einen oder mehreren Relaisknoten (RN) in ihrem Abdeckungsbereich zu einem Segment basierend auf ihren berichteten geografischen Positionen, und Mittel zur Durchführung eines Schritts des Informierens der Relaisknoten (RN) und/oder Benutzereinrichtungsknoten (UE) über die Zugehörigkeit aller Relaisknoten (RN) und Benutzereinrichtungsknoten (UE) zu einem Segment, wobei die Empfangs- und Auswertungsmittel weitere Messberichte nur für eine Teilmenge aller weiteren Kommunikationsverbindungen zwischen einem Relaisknoten (RN) und dem berichtenden Benutzereinrichtungsknoten (UE) oder zwischen einem anderen Relaisknoten und dem berichtenden Relaisknoten (RN) empfangen, wobei die Auswahl der Teilmenge in dem Relaisknoten (RN) und dem Benutzereinrichtungsknoten (UE) gemäß dem Kriterium durchgeführt wird, ob sich beide Knoten einer jeweiligen weiteren Kommunikationsverbindung in dem gleichen Segment befinden, und ferner umfassend Mittel zum Bestimmen eines Single-Hop- oder Multi-Hop-Kommunikationswegs für die Kommunikation mit einem Benutzereinrichtungsknoten (UE) oder Relaisknoten (RN) basierend auf einer Auswertung der Kanalqualitäten, die in den Messberichten und weiteren Messberichten berichtet werden, und ferner umfassend Mittel zum Informieren der Benutzereinrichtungsknoten (UE) oder Relaisknoten (RN) über den Single-Hop- oder Multi-Hop-Kommunikationsweg, der für die Kommunikation mit dem Benutzereinrichtungsknoten (UE) oder Relaisknoten (RN) genommen werden soll.

13. Relaisknoten (RN), der zur Verwendung in dem Verfahren nach einem der Ansprüche 1 bis 11 ausgelegt ist, umfassend Mittel zum Senden eines oder mehrerer Messberichte an eine Basisstation (200) bezüglich der Kanalqualität einer Kommunikationsverbindung über einen Single-Hop-Kommunikationsweg zwischen der Basisstation (200) und dem berichtenden Relaisknoten (RN), und ferner umfassend Mittel zum Senden eines oder mehrerer weiterer Messberichte an die Basisstation (200) bezüglich der Kanalqualität der weiteren Kommunikationsverbindungen von anderen Relaisknoten (RN) zu dem berichtenden Relaisknoten (RN) über einen Multi-Hop-Kommunikationsweg, ferner umfassend einen Schritt des Empfangens einer Information von der Basisstation (200) über die Zugehörigkeit von allen Relaisknoten (RN) und Benutzereinrichtungsknoten (UE) in dem Abdeckungsbereich der Basisstation (200) zu einem Segment des Abdeckungsbereichs, wobei die Mittel zum Senden weiterer Messberichte ausgelegt sind, um diese weiteren Messberichte nur an eine Teilmenge aller ihrer Kommunikationsverbindungen zu anderen Relaisknoten zu senden, wobei die Relaisknoten (RN) Mittel zur Auswahl einer Teilmenge aller weiteren Kommunikationsverbindungen zwischen einem anderen Relaisknoten und dem berichtenden Relaisknoten (RN) umfassen, auf denen weitere Messberichte an die Basisstation (200) gesendet werden, wobei die Auswahl der Teilmenge in dem Relaisknoten (RN) gemäß dem Kriterium durchgeführt wird, ob sich beide Knoten einer jeweiligen weiteren Kommunikationsverbindung in dem gleichen Segment befinden.

14. Benutzereinrichtungsknoten (UE), der zur Verwendung in dem Verfahren nach einem der Ansprüche 1 bis 11 ausgelegt ist, umfassend Mittel zum Senden eines oder mehrerer Messberichte bezüglich der Kanalqualität der Single-Hop-Kommunikationsverbindung an eine Basisstation (200), und umfassend Mittel zum Senden eines oder mehrerer weiterer Messberichte an die Basisstation (200) bezüglich der Kanalqualität weiterer Kommunikationsverbindungen von einem Relaisknoten (RN) zu dem berichtenden Benutzereinrichtungsknoten (UE), ferner umfassend einen Schritt des Empfangens einer Information von der Basisstation (200) über die Zugehörigkeit aller Relaisknoten (RN) und Benutzereinrichtungsknoten (UE) in dem Abdeckungsbereich der Basisstation (200) zu einem Segment des Abdeckungsbereichs, und wobei die Mittel zum Senden weiterer Messberichte ausgelegt sind, um diese weiteren Messberichte nur an eine Teilmenge von allen ihren Kommunikationsverbindungen zu Relaisknoten zu senden, wobei die Benutzereinrichtungsknoten (UE) Mittel zur Auswahl einer Teilmenge aller weiteren Kommunikationsverbindungen zwischen einem Relaisknoten (RN) und dem berichtenden Benutzereinrichtungsknoten (UE) umfassen, auf denen weitere Messberichte an die Basisstation (200) gesendet werden, wobei die Auswahl der Teilmenge in dem Benutzereinrichtungsknoten (UE) gemäß dem Kriterium, ob sich beide Knoten einer jeweiligen weiteren Kommunikationsverbindung in dem gleichen Segment befinden, durchgeführt wird.

## Revendications

1. Procédé de sélection de route dans un système de communication mobile, comprenant une station de base (200) connectée à un ou plusieurs noeuds de relais (RN) et un ou plusieurs noeuds d'équipement utilisateur (UE) directement sur une route de communication à saut unique et par l'intermédiaire d'un ou plusieurs nœuds de relais (RN) sur une route de communication à sauts multiples, dans lequel un nœud d'équipement utilisateur (UE) envoie à la station de base (200) un ou plusieurs rapports de mesure concernant la qualité de canal de la liaison de communication directe, dans lequel en outre la position est rapportée depuis le ou les nœuds de relais (RN) et un ou plusieurs nœuds d'équipement utilisateur (UE) jusqu'à la station de base (200), dans lequel ladite station de base (200) met en oeuvre une segmentation de sa zone de couverture en utilisant une pluralité d'antennes de secteur ou en segmentant la zone de couverture en une pluralité de zones géographiques et dans lequel la station de base détermine l'affiliation de chacun parmi ledit ou lesdits nœuds d'équipement utilisateur (UE) et chacun parmi ledit ou lesdits nœuds de relais (RN) dans sa zone de couverture à un segment, sur la base de leur position géographique rapportée, dans lequel ladite station de base (200) informe les nœuds de relais (RN) et les nœuds d'équipement utilisateur (UE) au sujet de l'affiliation de tous les nœuds de relais et nœuds d'équipement utilisateur dans la zone de couverture à un segment et dans lequel les nœuds de relais (RN) et/ou nœuds d'équipement utilisateur (UE) envoient des rapports de mesure supplémentaires à la station de base (200) uniquement pour un sous-ensemble de toutes les liaisons de communication supplémentaires entre un nœud de relais (RN) et le nœud d'équipement utilisateur (UE) rapportant ou entre un autre nœud de relais et le nœud de relais (RN) rapportant, dans lequel la sélection du sous-ensemble est mise en œuvre dans le ou les nœuds de relais (RN) ou un ou plusieurs nœuds d'équipement utilisateur (UE) selon le critère si l'un et l'autre des nœuds d'une liaison de communication supplémentaire respective sont situés dans le même segment, dans lequel la station de base (200) détermine une route de communication à saut unique ou à sauts multiples pour la communication avec l'équipement utilisateur (UE) rapportant sur la base d'une évaluation des qualités de canal rapportées dans les rapports de mesure et les rapports de mesure supplémentaires et informe le nœud d'équipement utilisateur (UE) rapportant ou le nœud de relais (RN) rapportant au sujet de la route de communication à saut unique ou à sauts multiples à prendre pour la communication avec un nœud d'équipement utilisateur (UE) ou nœud de relais (RN) rapportant.

2. Procédé selon la revendication 1, dans lequel la segmentation de la zone de couverture est sous la forme de secteurs angulaires (S1 à S4) et de couches de formes circulaire et annulaire (L1 à L3) autour de la station de base (200).

3. Procédé selon la revendication 2, dans lequel la sélection du sous-ensemble est mise en œuvre dans le ou les nœuds de relais (RN) ou un ou plusieurs nœuds d'équipement utilisateur (UE) par la définition selon laquelle des rapports de mesure sont limités à un envoi à la station de base (200) uniquement pour les trajets de communication depuis/vers un nœud rapportant vers/depuis un nœud situé dans le même secteur (S1 à S4) mais une couche (L1, L2) en dessous de la couche (L2, L3) dans laquelle le nœud rapportant se situe, où la numérotation des couches démarre avec la couche dans laquelle la station de base (200) se situe au centre.

4. Procédé selon l'une des revendications 2 ou 3, dans lequel l'affiliation d'un nœud de relais (RN) ou d'un nœud d'équipement utilisateur (UE) à un secteur (S1 à S4) et/ou à une couche (L1 à L3) est déterminée par la station de base (200) sur la base de la position dans un système de positionnement rapportée par le nœud de relais (RN) et le nœud d'équipement utilisateur (UE).

5. Procédé selon la revendication 4, dans lequel le système de positionnement utilisé pour déterminer la position d'un nœud de relais (RN) ou d'un nœud d'équipement utilisateur (UE) correspond à au moins l'un parmi un système de navigation satellite tel que le système de positionnement global GPS, le système de navigation globale par satellite GLONASS, Galileo, Beidou et similaires.

6. Procédé selon la revendication 1, dans lequel la segmentation de la zone de couverture est sous la forme de couches (L1 à L3) autour de la station de base (200).

7. Procédé selon la revendication 6, dans lequel l'affiliation à une couche (L1 à L3) est déterminée par la station de base (200) sur la base des rapports de mesure provenant des nœuds de relais (RN) et des nœuds d'équipement utilisateur (UE).

8. Procédé selon la revendication 6 ou 7, dans lequel la règle de sélection correspond à la définition selon laquelle les rapports de mesure sont limités à un envoi à la station de base (200) uniquement pour les liaisons de communication depuis/vers un nœud rapportant vers/depuis un nœud situé dans une couche se trouvant une couche en dessous de la couche dans laquelle le nœud rapportant se situe.

9. Procédé selon l'une des revendications 2 à 8, dans lequel la station de base (200) informe les nœuds de relais (RN) et/ou les nœuds d'équipement utilisateur (UE) au sujet de leur affiliation à un secteur (S1 à S4) et/ou à une couche (L1 à L3) au moyen d'un service de diffusion ou un service d'interrogation.

10. Procédé selon la revendication 9, dans lequel le service de diffusion comprend le fait que la station de base (200) transmet un ou plusieurs messages de diffusion avec lesquels les nœuds de relais (RN) et/ou les nœuds d'équipement utilisateur (UE) seront informés au sujet de leur affiliation à un secteur (S1 à S4) et/ou à une couche (L1 à L3).

11. Procédé selon la revendication 9, dans lequel le service d'interrogation comprend le fait que la station de base (200) transmet l'affiliation d'un nœud de relais (RN) et/ou d'un nœud d'équipement utilisateur (UE) à un secteur (S1 à S4) et/ou à une couche (L1 à L3) dans un message d'autorisation de planification en réponse à un message de demande de planification provenant d'un nœud de relais (RN) ou d'un nœud d'équipement utilisateur (UE).

12. Station de base (200) conçue pour l'utilisation dans le procédé selon l'une des revendications précédentes, comprenant des moyens de réception et d'évaluation (230) conçus pour recevoir et évaluer des rapports de mesure provenant d'un nœud de relais (RN) rapportant et/ou d'un nœud d'équipement utilisateur (UE) rapportant directement sur une route de communication à saut unique et des rapports de mesure supplémentaires par l'intermédiaire d'un ou plusieurs nœuds de relais (RN) sur une route de communication à sauts multiples et comprenant en outre des moyens de planification (225), comprenant des moyens pour mettre en œuvre une segmentation de la zone de couverture de station de base en utilisant une pluralité d'antennes de secteur ou en segmentant la zone de couverture en une pluralité de zones géographiques, comprenant en outre des moyens pour mettre en œuvre une étape de détermination de l'affiliation de chacun parmi ledit ou lesdits nœuds d'équipement utilisateur (UE) et chacun parmi ledit ou lesdits nœuds de relais (RN) dans sa zone de couverture à un segment sur la base de leur position géographique rapportée et des moyens pour mettre en œuvre une étape consistant à informer les nœuds de relais (RN) et/ou les nœuds d'équipement utilisateur (UE) au sujet de l'affiliation de tous les nœuds de relais (RN) et nœuds d'équipement utilisateur (UE) à un segment, dans laquelle lesdits moyens de réception et d'évaluation reçoivent des rapports de mesure supplémentaires uniquement pour un sous-ensemble de toutes les liaisons de communication supplémentaires entre un nœud de relais (RN) et le nœud d'équipement utilisateur (UE) rapportant ou entre un autre nœud de relais et le nœud de relais (RN) rapportant, dans laquelle la sélection du sous-ensemble est mise en œuvre dans le nœud de relais (RN) et l'équipement utilisateur (UE) selon le critère si l'un et l'autre des nœuds d'une liaison de communication supplémentaire respective sont situés dans le même segment et comprenant en outre des moyens de détermination d'une route de communication à saut unique ou à sauts multiples pour la communication avec un nœud d'équipement utilisateur (UE) ou un nœud de relais (RN) sur la base d'une évaluation des qualités de canal rapportées dans les rapports de mesure et les rapports de mesure supplémentaires et comprenant en outre des moyens pour informer le nœud d'équipement utilisateur (UE) ou le nœud de relais (RN) au sujet de la route de communication à saut unique ou à sauts multiples à prendre pour la communication avec ledit nœud d'équipement utilisateur (UE) ou nœud de relais (RN).

13. Nœud de relais (RN) conçu pour l'utilisation dans le procédé selon l'une des revendications 1 à 11, comprenant des moyens pour envoyer un ou plusieurs rapports de mesure à une station de base (200) concernant la qualité de canal d'une liaison de communication sur une route de communication à saut unique entre ladite station de base (200) et le nœud de relais (RN) rapportant et comprenant en outre des moyens pour envoyer un ou plusieurs rapports de mesure supplémentaires à la station de base (200) concernant la qualité de canal de liaisons de communication supplémentaires depuis un autre nœud de relais (RN) vers le nœud de relais (RN) rapportant, sur une route de communication à sauts multiples, comprenant en outre une étape de réception depuis ladite station de base (200) d'une information concernant l'affiliation de tous les nœuds de relais (RN) et nœuds d'équipement utilisateur (UE) dans la zone de couverture de la station de base (200) à un segment de la zone de couverture, dans lequel les moyens pour envoyer des rapports de mesure supplémentaires sont conçus pour envoyer ces rapports de mesure supplémentaires uniquement pour un sous-ensemble de toutes ses liaisons de communication vers d'autres nœuds de relais, dans lequel les nœuds de relais (RN) comprennent des moyens pour sélectionner un sous-ensemble de toutes les liaisons de communication supplémentaires entre un autre nœud de relais et le nœud de relais (RN) rapportant, sur lequel des rapports de mesure supplémentaires sont envoyés à la station de base (200), dans lequel la sélection du sous-ensemble est mise en œuvre dans le nœud de relais (RN) selon le critère si l'un et l'autre des nœuds d'une liaison de communication supplémentaire respective sont situés dans le même segment.

14. Nœud d'équipement utilisateur (UE) conçu pour l'utilisation dans le procédé selon l'une des revendications 1 à 11, comprenant des moyens pour envoyer un ou plusieurs rapports de mesure concernant la qualité de canal de la liaison de communication à saut unique vers une station de base (200) et comprenant des moyens pour envoyer un ou plusieurs rapports de mesure supplémentaires à la station de base (200) concernant la qualité de canal de liaisons de communication supplémentaires depuis un nœud de relais (RN) vers le nœud d'équipement utilisateur (UE) rapportant, comprenant en outre une étape de réception depuis ladite station de base (200) d'une information concernant l'affiliation de tous les nœuds de relais (RN) et nœuds d'équipement utilisateur (UE) dans la zone de couverture de la station de base (200) à un segment de la zone de couverture et dans lequel les moyens pour envoyer des rapports de mesure supplémentaires sont conçus pour envoyer ces rapports de mesure supplémentaires uniquement pour un sous-ensemble de toutes ses liaisons de communication à des nœuds de relais, dans lequel les nœuds d'équipement utilisateur (UE) comprennent des moyens pour sélectionner un sous-ensemble de toutes les liaisons de communication supplémentaires entre un nœud de relais (RN) et le nœud d'équipement utilisateur (UE) rapportant sur lequel des rapports de mesure supplémentaires sont envoyés à la station de base (200), dans lequel la sélection du sous-ensemble est mise en œuvre dans le nœud d'équipement utilisateur (UE) selon le critère si l'un et l'autre des nœuds d'une liaison de communication supplémentaire respective sont situés dans le même segment.
